# EUROPEAN PATENT SPECIFICATION

(11) **EP 2 520 470 B1**
(45) Date of publication and mention of the grant of the patent: **28.05.2014**
(21) Application number: 11164966.1
(22) Date of filing: 05.05.2011
(51) Int. Cl.: B60R 21/231, B60R 21/36

(54) **A pedestrian airbag**
Fußgänger-Airbag
Airbag pour piétons

(43) Date of publication of application: 07.11.2012
(73) Proprietor: Autoliv Development AB, 447 83 Vårgårda (SE)
(72) Inventor: Reiter, Thomas, 85256, Vierkirchen (DE); Lang, Christian, 80807, Munich (DE); Wehner, Katharina, 85241, Hebertshausen (DE); Mehnert, Mauricio, Vårgårda SE-447 83 (SE)
(74) Representative: Parry, Simon James

(56) References cited:
- EP-A1- 1 775 177
- EP-A1- 1 975 015
- DE-A1-102008 060 277

## Description

The present invention relates to a pedestrian airbag, and more particularly relates to a pedestrian airbag arrangement for a motor vehicle having a windscreen.

When a motor vehicle is involved in a frontal impact with a pedestrian, it is common for the body of the pedestrian to strike the windscreen of the vehicle which can result in serious injury to the pedestrian, and significant damage to the vehicle. In an attempt to alleviate this, it has been proposed to provide a motor vehicle with a so-called pedestrian airbag which, if vehicle sensors indicate that a collision with a pedestrian is occurring or is likely to occur, inflates to cover a central portion of the windscreen, and/or the left and right A-pillars of the vehicle. Typically, an airbag of this general type is provided in an initially tightly folded and/or rolled package and is stored beneath a rear part of the vehicle's hood or bonnet, or beneath a cowl which is provided between the base of the windscreen and the rear part of the hood or bonnet. The rear of the hood or bonnet may be lifted, by a suitable air-bag, piston or other arrangement, to allow sufficient space for the pedestrian airbag to inflate so that it deploys in a manner effective to cover at least part of the windscreen and/or A-pillars of the vehicle, thereby cushioning the impact of a pedestrian with these parts of the vehicle. Alternatively, it is also possible to configure the pedestrian airbag such that as it begins inflation it performs the hood-lifting function itself. Such an arrangement may incorporate a cell structure to the pedestrian airbag beneath the hood, or may comprise a structure adjacent the airbag to guide the airbag for inflation in a direction effective to lift the rear part of the hood or bonnet.

As will be appreciated, however, space beneath the rear part of a vehicle's hood or bonnet can be very limited which makes it difficult to conveniently package a sufficiently large airbag to ensure adequate protection for a pedestrian. Also, the larger the airbag which is successfully packaged in such an arrangement, then the larger the volume of gas required to inflate the airbag (which also necessitates a larger inflator). Relying on a large volume of gas to inflate a pedestrian airbag generally results in a slower deployment time which can adversely affect the effectiveness of the airbag in preventing or reducing injuries to a pedestrian.

Most conventional pedestrian airbags have a so-called two-dimensional construction comprising a front panel and a rear panel of fabric which are interconnected around their peripheral edges to define an inflatable volume. Such airbag constructions are easy to package in the tight constraints beneath the rear part of a vehicle's hood or bonnet, and have been found to provide good protection to pedestrians striking a generally central region of the airbag over the main part of the vehicle's windscreen. However, the inventors have discovered that such a 2-dimensional construction is not sufficiently effective in protecting a pedestrian who happens to fall against an end region of the airbag, generally adjacent an A-pillar of the motor vehicle at the side of the windscreen.

EP1975015A1 discloses a pedestrian airbag that deploys over part of a vehicle's windscreen.

EP1775177A1 discloses a passenger airbag forming a recess.

It is therefore an object of the present invention to provide an improved pedestrian airbag.

According to the present invention, there is provided a pedestrian airbag for a motor vehicle, the airbag defining an inflatable volume for the receipt of inflating gas, the inflatable volume being defined by a front layer of flexible material, a rear layer of flexible material and two end sheets of flexible material; the front and rear layers being interconnected along their peripheral edges in a central region of the airbag, and the two end sheets each being connected between respective peripheral edges of the front and rear layers at opposite end regions of the airbag.

Preferably, the end regions of the airbag have a depth defined at least in part by the shape of the end sheets when the airbag is inflated.

Advantageously, each said end sheet extends at least partly around a respective corner of the airbag when it is inflated.

Conveniently, said end sheets are of substantially identical shape.

Preferably, each said end sheet is generally elongate and tapers towards each end.

Conveniently, said front and rear layers and said end sheets are each formed of fabric.

Advantageously, said front and rear layers of fabric are formed simultaneously by a one-piece weaving technique.

Conveniently, each said end sheet is stitched to the respective peripheral edges of the front and rear layers at said end regions of the airbag.

Preferably, the pedestrian airbag according is provided on a motor vehicle having a windscreen and is configured for deployment upon inflation so as to extend over or across at least part of the windscreen such that said end regions of the airbag incorporating said end sheets each lie generally adjacent a respective A-pillar of the motor vehicle.

Advantageously, the airbag is arranged for deployment in a generally rearwards direction relative to the hood or bonnet of the vehicle, and wherein each said corner is a rear corner remote from the hood or bonnet when the airbag is inflated.

So that the invention may be more readily understood, and so that further features thereof may be appreciated, embodiments of the invention will now be described by way of example with reference to the accompanying drawings in which:
Figure 1 is a plan view showing an initial stage in the production of a conventional pedestrian airbag, illustrating two superimposed sheets of flexible material;
Figure 2 is a view corresponding generally to that of figure 1, showing the sheets connected around their peripheral edges to define an inflatable volume and with a seam interconnecting the two sheets at a position inward of their peripheral edges;
Figure 3 is a schematic illustration showing the airbag in a deployed condition in which it extends across the windscreen of a motor vehicle;
Figure 4 is an end view of the airbag of figures 1 to 3, showing the end of the airbag in the deployed condition;
Figure 5 is a view similar to that of figure 1, showing an initial stage in the production of an airbag in accordance with the present invention, illustrating two superimposed sheets of flexible material;
Figure 6 a view corresponding generally to that of figure 5, showing the sheets connected by a seam around a part of their peripheral edges in a central region;
Figure 7 is a plan view of one of a pair of additional sheets of fabric used to form the airbag of the present invention;
Figure 8 is a view similar to that of figure 6 but which shows a sheet of the type illustrated in figure 7 connected between the peripheral edges of the of the larger sheets at each end to define an inflatable volume;
Figure 9 is an end view similar to that of figure 4 but which shows the end configuration of the airbag of the present invention, when in the deployed condition;
Figure 10 is a perspective view of the deployed airbag illustrated in figure 9;
Figure 11 is a view similar to that of figure 8 but which shows panels interconnected in a slightly different manner to define an airbag in accordance with another embodiment of the present invention;
Figure 12 is an end view of the airbag shown in figure 11 in a deployed condition;
Figure 13 is a view similar to that of figures 8 and 11 but which shows panels interconnected in another alternative manner to define an airbag in accordance with another embodiment of the present invention; and
Figure 14 is an end view of the airbag shown in figure 13 in a deployed condition.

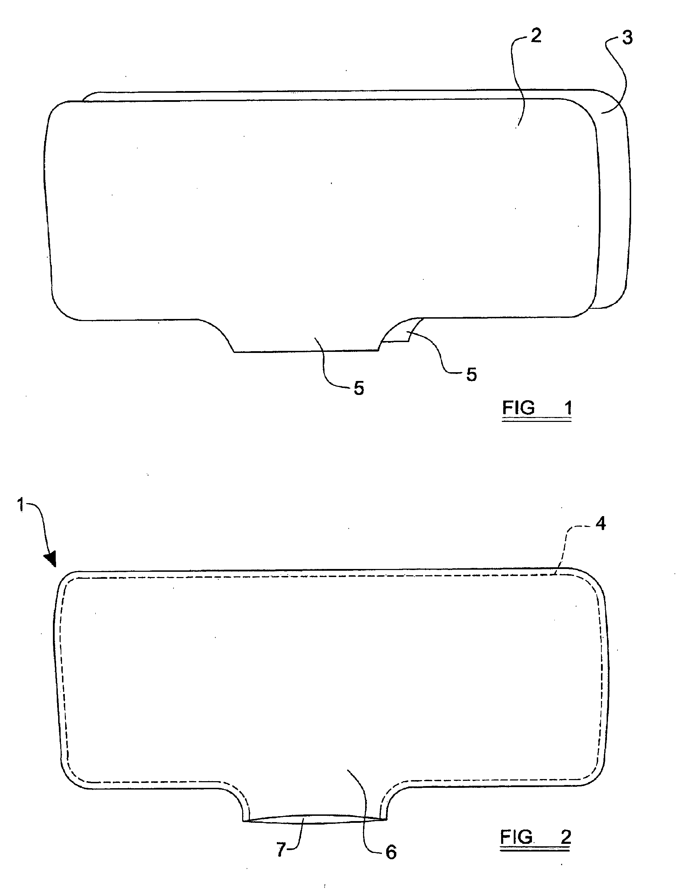

Referring initially to figures 1 to 4, the construction and resulting configuration of a generally conventional pedestrian airbag will briefly be discussed, in order that the novelty of the present invention may be more readily appreciated.

Figure 1 shows a pair substantially identical sheets 2, 3 of flexible material from which a generally conventional pedestrian airbag 1 is typically produced. The sheets 2, 3 are generally formed from woven fabric material and are both generally rectangular. The sheets 2, 3 are shown in figure 1 in superimposed relation to one another. As shown in figure 2, the two sheets 2, 3 are interconnected along substantially the entire extent of their peripheral edges by a peripheral seam 4 to define an inflatable volume between the sheets for the receipt of inflating gas. As will be noted, each sheet is provided with an outwardly projecting tab 5 at a generally central position along one of its long sides. The two tabs 5 are aligned when the sheets are superimposed, and the peripheral seam 4 connecting the two sheets begins at one end of the aligned tabs 5, runs around the periphery of the rectangular sheets, and terminates at the opposite end of the aligned tabs 5. The tabs 5 are thus unconnected along their length and so cooperate to form a neck 6 to the airbag, the neck defining a gas inlet aperture 7 to the airbag. The neck 6 is intended to be fitted to an inflator, such as a gas generator, in a known manner such that upon actuation of the inflator, a large volume of inflating gas will be directed into the interior volume of the airbag 1, thereby inflating the airbag.

The airbag 1 is initially provided in a tightly packed package (not shown) under a rear part of the hood or bonnet 8 of a motor vehicle 9, at a position immediately in front of the vehicle's windscreen 10. More particularly, the airbag 1 will be fluidly connected, via its neck 6 and associated inlet aperture 7, to an inflator 11 such as a gas generator mounted beneath the rear part of the hood or bonnet 8.

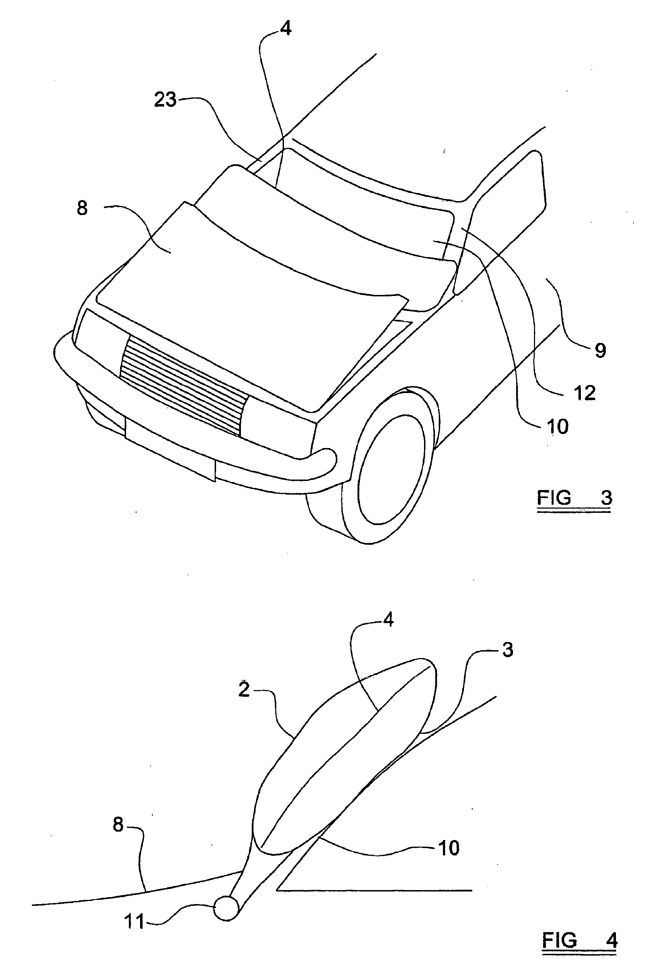

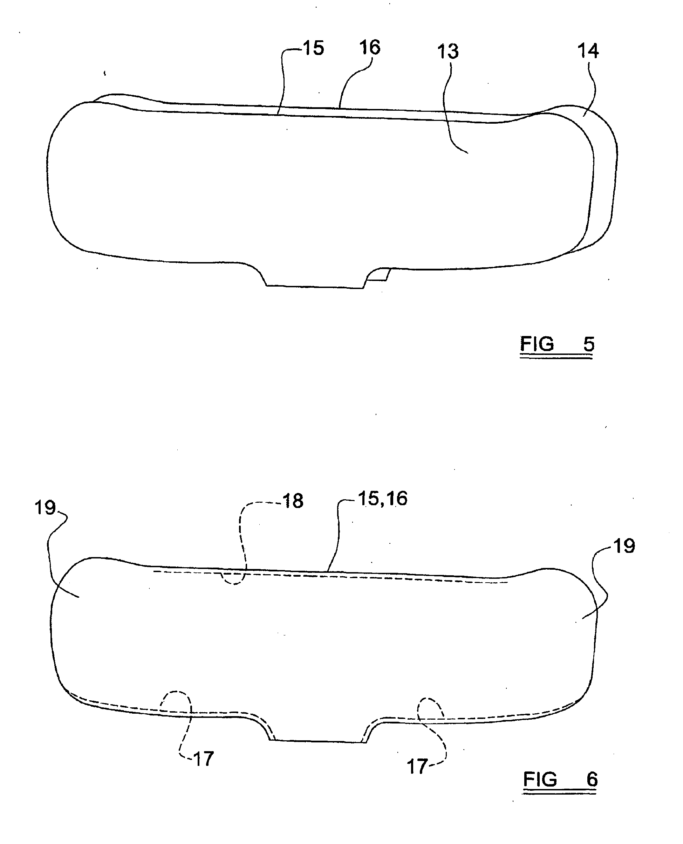

Figures 3 and 4 illustrate a motor vehicle fitted with a conventional pedestrian airbag 1 of the type described above, and show the airbag 1 in an inflated condition following actuation of the inflator 11. The rear of the hood or bonnet 8 is lifted, for example by another air-bag, a piston or other lifting arrangement, to allow sufficient space for the pedestrian airbag 1 to inflate so that it deploys in a manner effective to cover at least part of the windscreen 10 and the adjacent A-pillars 12 of the vehicle as illustrated in figures 4 and 5, thereby cushioning the impact of a pedestrian with these parts of the vehicle.

As will thus be appreciated, the conventional airbag arrangement described above has a structure in which the inflatable volume is defined solely by a pair of substantially identical fabric panels which are interconnected around their peripheral edges. This means that when the airbag 1 is inflated as shown in figures 3 and 4 it has a so-called two-dimensional configuration with the depth of the inflated airbag arising only from the internal pressure of the inflating gas urging the front and rear sheets 2, 3 away from one another. The shape of the inflated airbag thus narrows towards the peripheral seam 4, as shown generally in figure 4. It has been found that in the end regions of the airbag, which as shown in figure 3 deploy over the side regions of the windscreen 10 and the adjacent A-pillars 12 of the vehicle, this narrowing two-dimensional configuration of the deployed airbag gives reduced protection to a pedestrian striking these parts of the airbag.

Turning now to consider figures 5 to 10, a first embodiment of the present invention will be described in detail.

Figure 5 shows a pair of substantially identical sheets of flexible material, namely a front sheet or layer 13 and a rear sheet or layer 14. The sheets 13, 14 are preferably formed from woven fabric material and are both generally rectangular. The sheets 13, 14 are shown in figure 5 in superimposed relation to one another.

As shown in figure 6, the two sheets 13, 14 are interconnected along their peripheral edges 15, 16 by lower and upper seams 18. However, in contrast to the prior art airbag shown in figures 1 to 4, in the airbag of the present invention the sheets 13, 14 are only directly interconnected along their peripheral edges 15, 16 in this way in a central region of the airbag. The end regions 19 of the two sheets 13, 14 are not directly interconnected and this is shown in figure 6 with the end parts of their peripheral edges simply superimposed but not connected.

It is to be noted, however, that whilst the front and rear layers 13, 14 are described above as separate sheets of flexible material such as fabric, it is envisaged that in variants of the invention they could be formed from a single sheet of flexible material, the sheet being folded in half to create the two superimposed layers which can then be interconnected by a single seam along the central part of their aligned peripheral edges in an otherwise similar manner to that described above with reference to figures 5 and 6. It is also envisaged that in some embodiments the two layers 13, 14 could be woven simultaneously via a so-called "one-piece weaving" technique of a type know *per se* in which the warp and weft yarns forming the two layers are interwoven in selected areas to form the interconnecting seams 17, 18 such that the seams 17, 18 are integral to the woven structure of the two sheets.

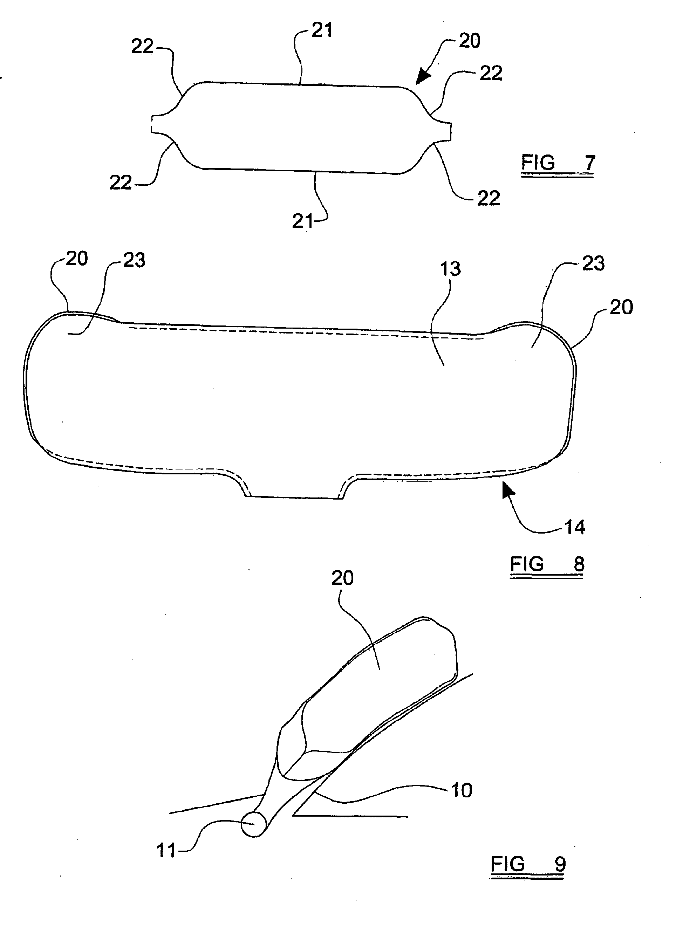

Figure 7 shows one of a pair of substantially identical separate end sheets 20 of flexible material which are used to form the airbag of the present invention. Both end sheets are preferably formed from fabric and have a substantially identical configuration to one another. As will be noted, the end sheets 20 have a generally rectangular elongate configuration but taper towards each end. As such, the end sheets 20 each have a pair of opposed side edges comprising generally parallel central regions 21 and curved end regions 22 where the shape of the sheets narrows towards its ends.

As shown in figure 8, each end sheet 20 is connected between the superimposed end parts of the peripheral edges of the front and rear layers 13, 14 at respective ends of the layers, where the peripheral edges of the layers 13, 14 are not connected to one another. More particularly, one side edge of each end sheet 20 is connected via a stitched seam to the free edge part of the front layer 13, and the other side edge of each sheet 20 is connected via a similar stitched seam to the free edge of the rear layer 14. The end sheets 20 are thus each connected between the front and rear layers 13, 14 and between the ends of the central seams 17, 18 interconnecting the front and rear layers 13, 14. The end sheets 20 thus effectively close the gaps between the seams 17, 18 interconnecting the front and rear layers 13, 14 to thereby define the inflatable volume of the airbag.

In the particular arrangement illustrated in figure 8, it will be noted that each end sheet 20 extends partly around a respective rear corner 23 of the airbag.

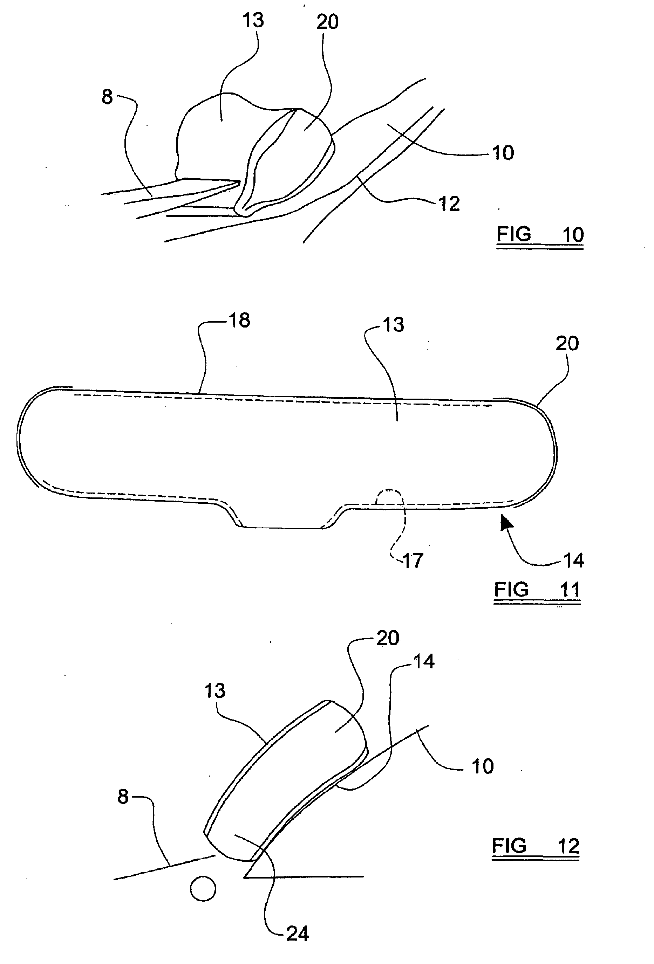

Upon inflation, the airbag of the present invention will deploy over and across the windscreen 10 in a generally similar manner to that of the prior art type of airbag illustrated in figures 1 to 4. However, the presence of the end sheets 20 between the peripheral edges of the front and rear layers 13, 14 at opposite ends of the airbag gives the shape of the inflated airbag of the present invention an important characteristic, as illustrated most clearly in figures 9 and 10. As will be appreciated, the presence of the end sheets 20 at each end of the airbag, between the front and rear layers 13, 14 gives the inflated airbag a three-dimensional configuration at the ends rather than the two dimensional configuration of the prior art. This means that rather than the depth of the airbag narrowing towards a peripheral seam at the ends (see figure 4) as in the case of the prior art, in the airbag of the present invention, the end regions of the airbag have increased depth when compared to the conventional construction, as defined by the shape of the end sheets 20 when it is inflated. Because the end regions of the airbag having the end sheets 20 deploy over or at least adjacent the A-pillars 12 of the vehicle, the configuration of the present invention provides significantly more inflated depth in this vulnerable area than the prior art arrangement. However, the airbag of the present invention retains the generally two-dimensional construction of the prior art in its central region between the two end regions.

Figures 11 and 12 illustrate, in similar views to those of figures 8 and 9, a slightly modified configuration of airbag in accordance with the present invention. In this arrangement, the two end sheets 20 are connected between the peripheral edges of the front and rear sheets 13, 14 in a manner such that the end sheets 20 extend more fully around the ends of the airbag. This gives the airbag even more increased depth in the frontal region of each end when it is inflated, as illustrated in figure 12.

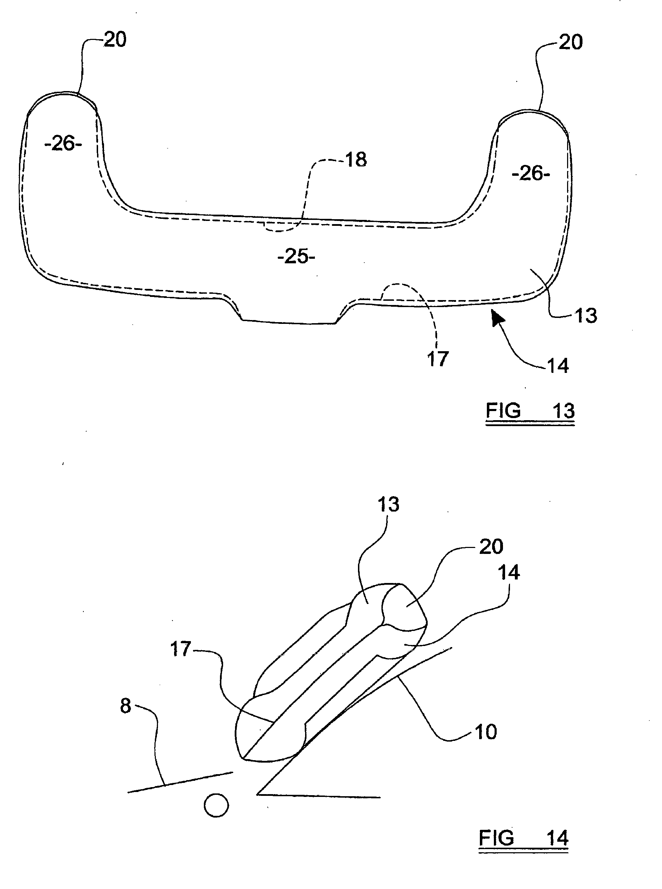

Figures 13 and 14 illustrate another modified configuration of airbag in accordance with the present invention. In this arrangement, the airbag has a generally U-shaped configuration when viewed from above, comprising a central region and a pair of rearwardly extending limbs 26 as shown in figure 13. The two end sheets 20 in this arrangement are connected between the peripheral edges of the front and rear sheets 13, 14 so as to extend around the rear corner of the airbag's end limbs 26, whilst the peripheral seam 17 interconnecting the front edges of the front and rear layers 13, 14 extends around the outer side of each limb 26. In this arrangement, the rearward position of the end sheets 20 between the front and rear layers 13, 14 focuses the creation of the three-dimensional shape at the rear of the airbag's end limbs 26 upon inflation.

When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

## Claims

1. A pedestrian airbag for a motor vehicle, the airbag defining an inflatable volume for the receipt of inflating gas, the inflatable volume being defined by a front layer (13) of flexible material, a rear layer (14) of flexible material and two end sheets (20) of flexible material; the airbag being **characterised by** the front and rear layers (13, 14) being interconnected (17, 18) along their peripheral edges (15, 16) in a central region of the airbag, and the two end sheets (20) each being connected between respective peripheral edges (15, 16) of the front and rear layers (13, 14) at opposite end regions of the airbag.

2. A pedestrian airbag according to claim 1, wherein the end regions (23) of the airbag have a depth defined at least in part by the shape of the end sheets(20) when the airbag is inflated.

3. A pedestrian airbag according to claim 2, wherein each said end sheet (20) extends at least partly around a respective corner of the airbag when it is inflated.

4. A pedestrian airbag according to any preceding claim, wherein said end sheets (20) are of substantially identical shape.

5. A pedestrian airbag according to any preceding claim wherein each said end sheet (20) is generally elongate and tapers towards each end.

6. A pedestrian airbag according to any preceding claim, wherein said front and rear layers (13, 14) and said end sheets (20) are each formed of fabric.

7. A pedestrian airbag according to claim 6, wherein said front and rear layers (13, 14) of fabric are formed simultaneously by a one-piece weaving technique.

8. A pedestrian airbag according to any preceding claim, wherein each said end sheet (20) is stitched to the respective peripheral edges of the front and rear layers at said end regions (23) of the airbag.

9. A pedestrian airbag according to any preceding claim provided on a motor vehicle (9) having a windscreen (10) and being configured for deployment upon inflation so as to extend over or across at least part of the windscreen (10) such that said end regions (23) of the airbag incorporating said end sheets (20) each lie generally adjacent a respective A-pillar (12) of the motor vehicle.

10. A pedestrian airbag according to claim 8, as dependant upon claim 3, the airbag being arranged for deployment in a generally rearwards direction relative to the hood or bonnet (8) of the vehicle, and wherein each said corner is a rear corner remote from the hood or bonnet (8) when the airbag is inflated.

## Patentansprüche

1. Fußgänger-Airbag für ein Kraftfahrzeug, wobei der Airbag ein aufblasbares Volumen zur Aufnahme von Füllgas definiert, wobei das aufblasbare Volumen durch eine vordere Lage (13) aus flexiblem Material, eine hintere Lage (14) aus flexiblem Material und zwei Abschlussbahnen (20) aus flexiblem Material definiert ist; wobei der Airbag **dadurch gekennzeichnet ist, dass** die vordere und hintere Lage (13, 14) entlang ihrer Umfangsränder (15, 16) in einem mittigen Bereich des Airbags miteinander verbunden (17, 18) sind, und die beiden Abschlussbahnen (20) jeweils zwischen jeweiligen Umfangsrändern (15, 16) der vorderen und hinteren Lage (13, 14) an gegenüberliegenden Endbereichen des Airbags verbunden sind.

2. Fußgänger-Airbag nach Anspruch 1, wobei die Endbereiche (23) des Airbags eine Tiefe aufweisen, die zumindest teilweise durch die Form der Abschlussbahnen (20) definiert ist, wenn der Airbag gefüllt ist.

3. Fußgänger-Airbag nach Anspruch 2, wobei jede Abschlussbahn (20) zumindest teilweise um eine jeweilige Ecke des Airbags verläuft, wenn er gefüllt ist.

4. Fußgänger-Airbag nach einem vorhergehenden Anspruch, wobei die Abschlussbahnen (20) im Wesentlichen gleich geformt sind.

5. Fußgänger-Airbag nach einem vorhergehenden Anspruch, wobei jede Abschlussbahn (20) ganz allgemein länglich ist und sich zu jedem Ende hin verjüngt.

6. Fußgänger-Airbag nach einem vorhergehenden Anspruch, wobei die vordere und hintere Lage (13, 14) und die Abschlussbahnen (20) jeweils aus Stoff geformt sind.

7. Fußgänger-Airbag nach Anspruch 6, wobei die vordere und hintere Lage (13, 14) aus Stoff gleichzeitig mittels eines Einteilwebverfahrens geformt sind.

8. Fußgänger-Airbag nach einem vorhergehenden Anspruch, wobei jede Abschlussbahn (20) an den Endbereichen (23) des Airbags an den jeweiligen Umfangsrändern der vorderen und hinteren Lage angenäht ist.

9. Fußgänger-Airbag nach einem vorhergehenden Anspruch, der an einem Kraftfahrzeug (9) vorgesehen ist, das eine Windschutzscheibe (10) aufweist, und für die Entfaltung beim Füllen eingerichtet ist, sodass er sich über oder quer über zumindest einen Teil der Windschutzscheibe (10) erstreckt, sodass die Endbereiche (23) des Airbags, die die Abschlussbahnen (20) beinhalten, ganz allgemein jeweils angrenzend an einer jeweiligen A-Säule (12) des Kraftfahrzeugs liegen.

10. Fußgänger-Airbag nach Anspruch 8, wenn er von Anspruch 3 abhängt, wobei der Airbag so eingerichtet ist, dass er sich in eine im Allgemeinen rückwärtige Richtung bezogen auf die Motorhaube (8) des Fahrzeugs entfaltet, und wobei jede derartige Ecke eine hintere Ecke entfernt von der Motorhaube (8) ist, wenn der Airbag gefüllt ist.

## Revendications

1. Airbag pour piétons destiné à un véhicule à moteur, l'airbag définissant un volume gonflable pour la réception de gaz de gonflage, le volume gonflable étant défini par une couche avant (13) en matériau flexible, une couche arrière (14) en matériau flexible et deux bandes d'extrémité (20) en matériau flexible ; l'airbag étant **caractérisé en ce que** les couches avant et arrière (13, 14) sont reliées (17, 18) entre elles le long de leurs bords périphériques (15, 16) dans une zone centrale de l'airbag, et les deux bandes d'extrémité (20) sont reliées chacune entre des bords périphériques (15, 16) respectifs des couches avant et arrière (13, 14) sur des zones d'extrémité opposées de l'airbag.

2. Airbag pour piétons selon la revendication 1, dans lequel les zones d'extrémité (23) de l'airbag présentent une profondeur définie au moins en partie par la forme des bandes d'extrémités (20) quand l'airbag est gonflé.

3. Airbag pour piétons selon la revendication 2, dans lequel chaque dite bande d'extrémité (20) s'étend au moins partiellement autour d'un coin respectif de l'airbag quand il est gonflé.

4. Airbag pour piétons selon une quelconque revendication précédente, dans lequel lesdites bandes d'extrémité (20) sont de forme essentiellement identique.

5. Airbag pour piétons selon une quelconque revendication précédente, dans lequel chaque dite bande d'extrémité (20) est globalement allongée et s'amincit vers chaque extrémité.

6. Airbag pour piétons selon une quelconque revendication précédente, dans lequel lesdites couches avant et arrière (13, 14) et lesdites bandes d'extrémité (20) sont toutes constituées de tissu.

7. Airbag pour piétons selon la revendication 6, dans lequel lesdites couches avant et arrière (13, 14) en tissu sont formées simultanément par une technique de tissage d'une seule pièce.

8. Airbag pour piétons selon une quelconque revendication précédente, dans lequel chaque dite bande d'extrémité (20) est cousue sur les bords périphériques respectifs des couches avant et arrière sur lesdites zones d'extrémité (23) de l'airbag.

9. Airbag pour piétons selon une quelconque revendication précédente prévu sur un véhicule à moteur (9) comportant un pare-brise (10) et configuré pour se déployer lors du gonflage de manière à s'étendre sur ou en travers d'au moins une partie du pare-brise (10) de sorte que lesdites zones d'extrémité (23) de l'airbag incluant lesdites bandes d'extrémité (20) se trouvent chacune globalement adjacente à un montant A (12) respectif du véhicule à moteur.

10. Airbag pour piétons selon la revendication 8, quand elle dépend de la revendication 3, l'airbag étant agencé pour se déployer dans une direction globalement vers l'arrière par rapport au capot (8) du véhicule, et dans lequel chaque dit coin est un coin arrière à distance du capot (8) quand l'airbag est gonflé.
